# EUROPÄISCHE PATENTANMELDUNG

(11) **EP 1 852 286 A1**
(43) Veröffentlichungstag der Anmeldung: **07.11.2007**
(21) Anmeldenummer: 06009100.6
(22) Anmeldetag: 02.05.2006
(51) Int. Cl.: B60J 1/20, B60J 7/00

(54) **Mitnahmevorrichtung für ein Rollo und Rollosystem für ein Fahrzeugdach**

(71) Anmelder: ArvinMeritor GmbH, 63128 Dietzenbach (DE)
(72) Erfinder: Biewer, Christian, 64839 Altheim (DE); Jugl, Michael, 65843 Sulzbach (DE)
(74) Vertreter: Sties, Jochen

(57) **Zusammenfassung**

Eine Mitnahmevorrichtung für ein Rollo hat ein Rastelement (24) und einen Griff (28), wobei das Rastelement (24) mit dem Griff (28) verbunden ist und von dem Griff (28) betätigbar ist.

## Beschreibung

Die Erfindung betrifft eine Mitnahmevorrichtung für ein Rollo und ein Rollosystem für ein Fahrzeug mit einem ersten Rollo, einem zweiten Rollo und einer solchen Mitnahmevorrichtung.

Rollosysteme mit mehreren Rollos sind aus dem Stand der Technik bekannt und sind einer lichtdurchlässigen Öffnung im Fahrzeugdach zugeordnet. Die lichtdurchlässige Öffnung kann gebildet sein durch beispielsweise ein feststehendes Panoramafenster oder durch ein bzw. mehrere transparente Deckel eines Schiebedachs. Die Rollos können zwischen einer geöffneten Stellung, in der sie den Lichtdurchtritt durch die Öffnung nicht behindern, und einer geschlossenen Stellung verstellt werden, in der sie den Lichteinfall durch die Öffnung entweder vollständig verhindern oder wenigstens abschwächen. Je nach Konstruktion können die Rollos auch in verschiedenen Zwischenstellungen zwischen der geschlossenen und der geöffneten Stellung gehalten werden.

Zur Verstellung von manuell betätigten Rollos sind Griffe vorgesehen, die von Fahrzeuginsassen betätigt werden können. Bei Rollosystemen mit zwei Rollos, d.h. einem vorderen und einem hinteren Rollo, kann der Griff des hinteren Rollos entfernt von einem Fahrzeuglenker angeordnet sein. Der Fahrzeuglenker kann diesen nicht ergreifen und somit das hintere Rollo nicht verstellen.

Die Aufgabe der Erfindung besteht darin, eine Mitnahmevorrichtung für ein Rollo bereitzustellen, mittels derer mehrere Rollos aneinandergekoppelt werden können, und ein Rollosystem für ein Fahrzeugdach, das ein Aneinanderkoppeln mehrerer Rollos erlaubt.

Zu diesem Zweck sieht die Erfindung eine Mitnahmevorrichtung für ein Rollo vor, mit einem Rastelement und einem Griff, wobei das Rastelement mit dem Griff verbunden ist und von dem Griff betätigbar ist. Die Mitnahmevorrichtung ist z.B. Teil eines Rollosystems bestehend aus zwei Rollos und koppelt die Rollos so aneinander, daß bei einer Betätigung des ersten Rollos das zweite Rollo mitgenommen wird. Das erste Rollo ist dabei vorzugsweise das vordere Rollo, dessen Griff leicht von einem Fahrzeuglenker betätigt werden kann. Ein zweites, hinteres Rollo kann so vom Fahrzeuglenker mitverstellt werden, ohne daß dieser anhalten muß, um das hintere Rollo vom Fond aus zu betätigen. Der Griff kann das Rastelement dabei so betätigen, daß das Rastelement eine Stellung einnimmt, in der es an dem hinteren Rollo angreift bzw. in der es nicht am hinteren Rollo angreift. Es kann z.B. ein federelastisches Element vorgesehen sein, das das Rastelement in eine Stellung beaufschlagt, in der es an dem Rollo angreift. Der Griff muß dann nur zum Entkoppeln der beiden Rollos betätigt werden.

Ferner betrifft die Erfindung ein Rollosystem für ein Fahrzeugdach, mit einem ersten Rollo, einem zweiten Rollo und einer Mitnahmevorrichtung der obengenannten Art, wobei die Mitnahmevorrichtung die Rollos so aneinander koppeln kann, daß bei einem Verschieben des ersten Rollos das zweite Rollo mitgenommen wird. Hinsichtlich der Vorteile wird auf die obigen Erläuterungen verwiesen.

Weitere Merkmale und Vorteile ergeben sich aus den Unteransprüchen.

Die Erfindung wird nachfolgend anhand von Ausführungsformen beschrieben, die in den Zeichnungen dargestellt sind. In den Zeichnungen zeigen:
- Figur 1 eine schematische, perspektivische Ansicht eines erfindungsgemäßen Rollosystems mit einer erfindungsgemäßen Mitnahmevorrichtung einer ersten und zweiten Ausführungsform und einem ersten und einem zweiten Rollo, wobei in Figur 1a beide Rollos geöffnet sind und die Mitnahmevorrichtung am zweiten Rollo angreift, in Figur 1b beide Rollos geschlossen sind und die Mitnahmevorrichtung am zweiten Rollo angreift, in Figur 1c beide Rollos geschlossen sind und die Mitnahmevorrichtung nicht am zweiten Rollo angreift und in Figur 1d das erste Rollo geschlossen und das zweite Rollo geöffnet ist,
- Figur 2 eine Prinzipskizze der Mitnahmevorrichtung nach Figur 1 gemäß der ersten Ausführungsform,
- Figur 3 einen vergrößerten Ausschnitt des mit X bezeichneten Bereichs in Figur 2 eines Rastelementes, wobei in Figur 3a das Rastelement nicht am Rollo angreift und in Figur 3b das Rastelement am Rollo angreift,
- Figur 4 eine Prinzipskizze der Mitnahmevorrichtung nach Figur 1 gemäß der zweiten Ausführungsform,
- Figur 5 einen vergrößerten Ausschnitt des mit Y bezeichneten Bereichs in Figur 4,
- Figur 6 eine schematische, perspektivische Ansicht eines erfindungsgemäßen Rollosystems mit einer erfindungsgemäßen Mitnahmevorrichtung einer dritten Ausführungsform und einem ersten und einem zweiten Rollo, wobei beide Rollos geöffnet sind, und
- Figur 7 eine Prinzipskizze der Mitnahmevorrichtung nach Figur 6.

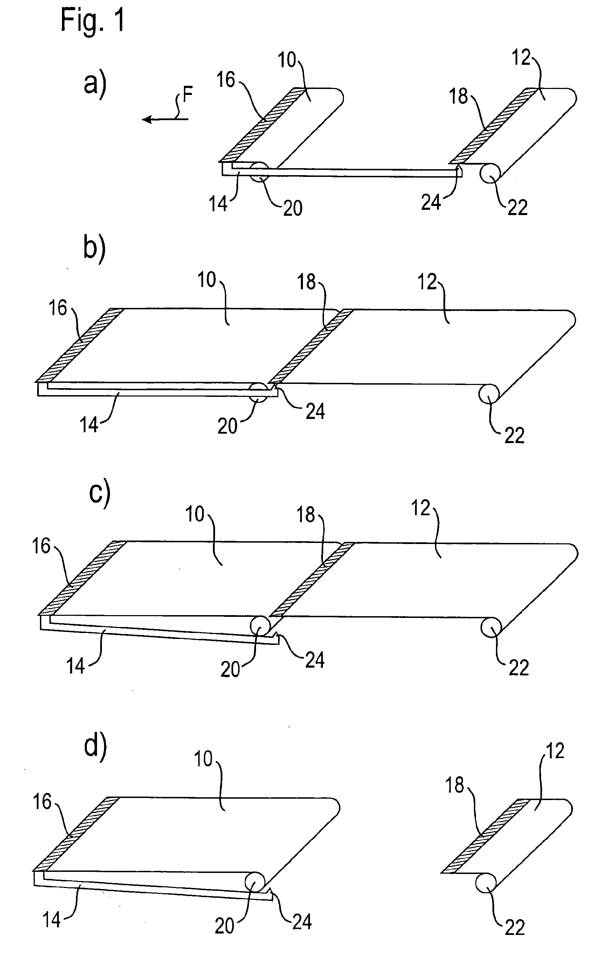

In Figur 1 ist schematisch ein Rollosystem gezeigt, das eine lichtdurchlässige Öffnung eines feststehenden Panoramafensters oder eines oder mehrerer transparenter Deckel eines Schiebedachs freigeben (Figur 1a) oder die Öffnung vollständig (Figuren 1b und 1c) oder teilweise (Figur 1d) abdecken kann. Dies funktioniert unabhängig von der Deckelstellung. Das Rollosystem besteht aus einem ersten, vorderen Rollo 10 und einem zweiten, hinteren Rollo 12. Die Rollos 10, 12 sind in zwei nicht gezeigten Führungsschienen, die entlang den in Längsrichtung verlaufenden Seitenrändern der Dachöffnung angeordnet sind, verstellbar und gleichläufig, d.h. beide Rollos 10, 12 werden in Fahrtrichtung F geschlossen, indem sie von Wickelkörpern 20, 22 nach vorne abgezogen werden.

Es ist eine Mitnahmevorrichtung 14 vorgesehen, mittels der das hintere Rollo 12 an das vordere Rollo 10 gekoppelt werden kann, so daß beim Verstellen des ersten Rollos 10 das zweite Rollo 12 mitverstellt wird.

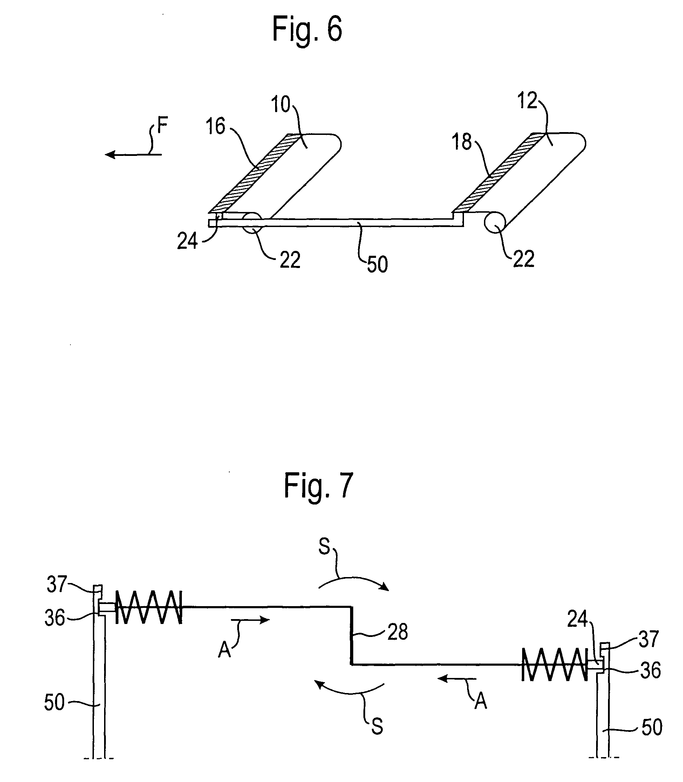

In den Figuren 1 bis 5 ist die Mitnahmevorrichtung 14 in einer ersten und zweiten Ausführungsform beschrieben, während Figuren 6 und 7 die Mitnahmevorrichtung 14 in einer dritten Ausführungsform zeigen.

Die Mitnahmevorrichtung 14 der ersten und zweiten Ausführungsform hat jeweils ein hakenartiges Rastelement 24, das an einem Spriegel 18 des hinteren Rollos 12 angreifen kann, wobei der Spriegel 18 am in Fahrtrichtung F gesehen vorderen Rand des hinteren Rollos 12 angebracht ist. Das Rastelement 24 ist federbelastet (federelastisches Element 26) und wird von dem federelastischen Element 26 in die Stellung beaufschlagt, in der es an dem zweiten Rollo 12 angreift.

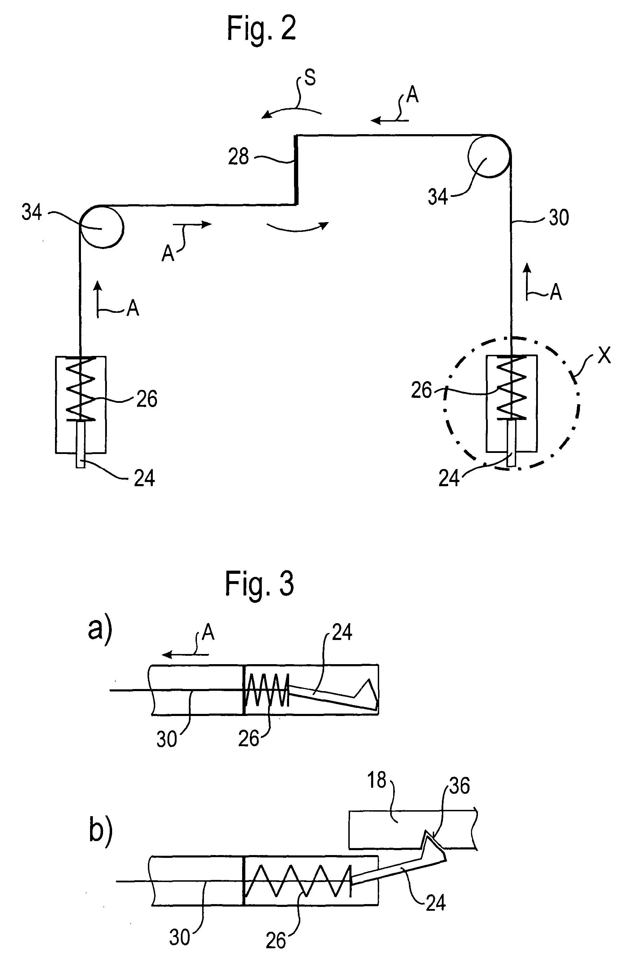

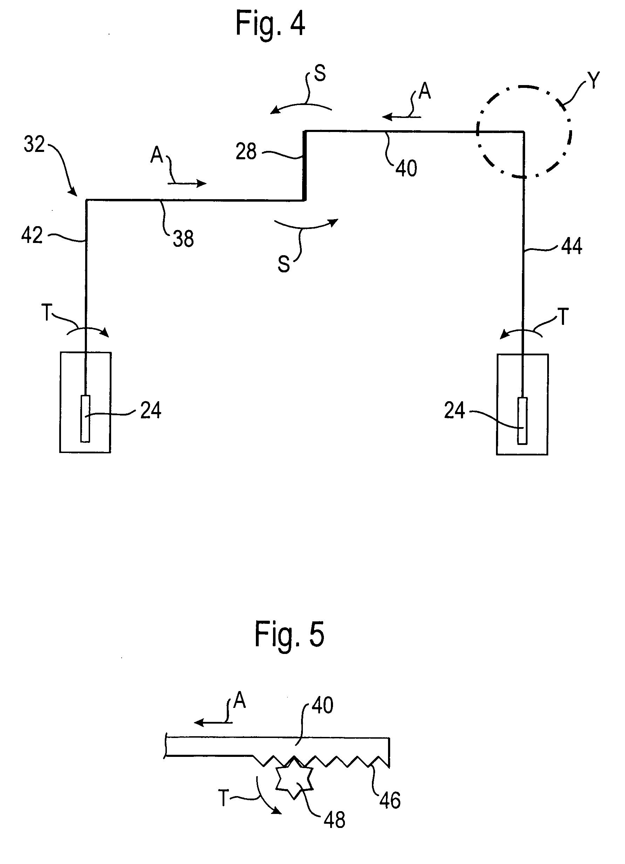

Es ist ein Griff 28 (schematisch in den Figuren 2 und 4 gezeigt) vorgesehen, der an einem Spriegel 16 des vorderen Rollos 10 angeordnet und Teil der Mitnahmevorrichtung 14 ist. Das Rastelement 24 kann mit dem Griff 28 über ein Seil 30 (Figuren 2 und 3) oder ein Gestänge 32 (Figuren 4 und 5) verbunden sein.

Figur 2 zeigt das einstückige, vorgespannte Seil 30, das den Griff 28 mit den zwei hakenartigen Rastelementen 24 verbindet. Die Rastelemente 24 sind an den Enden des Seils 30 angebracht und werden von den federelastischen Elementen 26 so beaufschlagt, daß sie in Aussparungen 36 am Spriegel 18 des hinteren Rollos 12 eingreifen, wobei die Aussparungen 36 vorzugsweise an die Form der Rastelemente 24 angepaßt ist. Es sind zwei Umlenkrollen 34 vorgesehen, an denen das Seil 30 angreift.

Bei einer Schwenkbewegung (Pfeil S) des Griffs 28 wird das vorgespannte Seil 30 in Richtung A gezogen. Die hakenartigen Rastelemente 24, die mit dem Seil 30 verbunden sind, werden entgegen der Kraft der federelastischen Elemente 26 in Richtung A gezogen und aus den Aussparungen 36 im Spriegel 18 herausbewegt. Die Kopplung der beiden Rollos 10, 12 ist dann aufgehoben, und das vordere Rollo 10 kann unabhängig vom hinteren Rollo 12 verschoben werden (Figuren 1c und 1d).

Wird der Griff 28 freigegeben, kann das vordere Rollo 10 erneut an das hintere Rollo 12 gekoppelt werden (Figuren 1a und 1b). Die federelastischen Elemente 26 drücken die Rastelemente 24 entgegen der Richtung A, wodurch die Rastelemente 24 in die Aussparungen 36 eingreifen und der Griff 28 über das Seil 30 in die Ausgangsstellung gezogen wird.

Genausogut könnte der Griff 28 in Richtung des Fahrzeuginnenraums gezogen werden, um die Rastelemente 24 aus den Aussparungen 36 zu bewegen und das erste Rollo 10 vom zweiten Rollo 12 zu entkoppeln. Auch ist eine Entkopplung des ersten und des zweiten Rollos 10, 12 durch eine Schiebebewegung des Griffs 28 möglich.

Es könnten auch Einführschrägen 37 (gestrichelt in Figur 3b gezeigt) angrenzend an die Aussparungen 36 vorgesehen sein. Eine Ankopplung des zweiten Rollos 12 an das erste Rollo 10 könnte dann ohne Betätigung des Griffs 28 erfolgen, da die federelastischen Elemente 26 die Rastelemente 24 so in Richtung der Aussparungen 36 beaufschlagen, daß die Rastelemente 24 bei geeigneter Ausbildung der Rastelemente 24 und der Einführschrägen 37 in die Aussparungen 36 gelangen.

In den Figuren 4 und 5 ist eine zweite Ausführungsform der Mitnahmevorrichtung 14 gezeigt. Die Mitnahmevorrichtung 14 ist hier als Gestänge 32 mit vier Stangen 38, 40, 42, 44 gezeigt. Die Stangen 38, 40, die direkt mit dem schwenkbaren Griff 28 (Schwenkbewegung S) verbunden sind, sind als Zahnstangen mit einer jeweiligen Verzahnung 46 ausgebildet. In der jeweiligen Verzahnung 46 kann ein Zahnrad 48 kämmen (vgl. Figur 5), das jeweils an den Stangen 42, 44 vorgesehen ist. Die beiden Rastelemente 24 sind an den Enden der Stangen 42, 44 angeordnet.

Bei einer Schwenkbewegung des Griffs 28 (Schwenkbewegung S) werden die Zahnstangen 38, 40 in Richtung A bewegt. Die jeweils an den Stangen 42, 44 vorgesehenen Zahnräder 48 drehen sich, wodurch die hakenartigen Rastelemente 24 aus den Aussparungen 36 am Spriegel 18 herausgedreht werden (Drehbewegung T). Eine Schwenkbewegung des Griffs 28 wird mittels der Zahnstangen und der Zahnräder 48 in eine Drehbewegung T umgewandelt. Sobald die Rastelemente 24 nicht in die Aussparungen 36 eingreifen, ist das erste Rollo 10 vom zweiten Rollo 12 entkoppelt (Figur 1c) und kann unabhängig von diesem verstellt werden (Figur 1d).

Zur Koppelung der beiden Rollos 10, 12 (Figuren 1a und 1b) muß der Griff 28 zurückgeschwenkt werden, wodurch sich die Stangen 38, 40 entgegen der Richtung A bewegen und sich die Zahnräder 48 entgegen der Drehbewegung T verdrehen. Dadurch werden die Rastelemente 24 gedreht und greifen in die Aussparungen 36 ein.

Eine Ankopplung des zweiten Rollos 12 an das erste Rollo 10 könnte auch ohne Betätigung des Griffs 28 mit Hilfe der federelastischen Elemente 26 und der Einführschrägen 37 (gestrichelt in Figur 3b gezeigt) erfolgen, wobei die Einführschrägen 37 angrenzend an die Aussparungen 36 vorgesehen sein könnten.

In den Figuren 6 und 7 ist eine dritte Ausführungsform der Mitnahmevorrichtung 14 gezeigt. Das Rastelement 24 und der Griff 28 sind am vorderen Rollo 10 vorgesehen. Das Rastelement 24 ist stiftartig ausgebildet und kann in eine Aussparung 36 einer Koppelstange 50 eingreifen. Die Koppelstange 50 ist am hinteren Rollo 10 angebracht.

Die federbelasteten Rastelemente 24 können aufgrund der Einführschrägen 37, die an den Koppelstangen 50 vorgesehen sind, gegen die Federkraft zurückgedrückt werden und anschließend in die Aussparungen 36 eingreifen, wodurch die beiden Rollos 10, 12 aneinander gekoppelt werden.

Um die beiden Rollos 10, 12 zu entkoppeln, muß der Griff 28 geschwenkt werden (Schwenkbewegung S). Dadurch werden die beiden Rastelemente 24 aus den Aussparungen 36 bewegt.

Anstatt der Einführschrägen 37 könnten die beiden Rollos 10, 12 auch über eine Schwenkbewegung des Griffs 28 aneinander gekoppelt werden.

Genausogut könnte die Mitnahmevorrichtung 14 aller Ausführungsformen Teil eines Rollosystems sein, dessen Rollos 10, 12 gegenläufig sind. Bei gegenläufigen Rollos sind die Wickelkörper 20, 22 im mittleren Bereich der Öffnung angeordnet, und das erste Rollo 10 wird in Fahrtrichtung F gezogen, um die Öffnung abzudecken, und das zweite Rollo 12 wird entgegen der Fahrtrichtung F gezogen, um die Öffnung abzudecken.

### Bezugszeichenliste:

- 10:: Rollo
- 12:: Rollo
- 14:: Mitnahmevorrichtung
- 16, 18:: Spriegel
- 20, 22:: Wickelkörper
- 24:: Rastelement
- 26:: federelastisches Element
- 28:: Griff
- 30:: Seil
- 32:: Gestänge
- 34:: Umlenkrolle
- 36:: Aussparung
- 37:: Einführschräge
- 38, 40, 42, 44:: Stange
- 46:: Verzahnung
- 48:: Zahnrad
- 50:: Koppelstange

## Patentansprüche

1. Mitnahmevorrichtung für ein Rollo, mit einem Rastelement (24) und einem Griff (28), wobei das Rastelement (24) mit dem Griff (28) verbunden ist und von dem Griff (28) betätigbar ist.

2. Mitnahmevorrichtung nach Anspruch 1, **dadurch gekennzeichnet, daß** ein federelastisches Element (26) vorgesehen ist, das das Rastelement (24) in die Stellung beaufschlagen kann, in der es an einem Rollo (12) angreift.

3. Mitnahmevorrichtung nach Anspruch 1 oder 2, **dadurch gekennzeichnet, daß** der Griff (28) an einem Spriegel (16) des ersten Rollos (10) angeordnet ist.

4. Mitnahmevorrichtung nach einem der vorhergehenden Ansprüche, **dadurch gekennzeichnet, daß** ein Seil (30) vorgesehen ist, das das Rastelement (24) mit dem Griff (28) verbindet.

5. Mitnahmevorrichtung nach einem der Ansprüche 1 bis 3, **dadurch gekennzeichnet, daß** ein Gestänge (32) vorgesehen ist, das aus mehreren Stangen (38, 40, 42, 44) besteht und das Rastelement (24) mit dem Griff (28) verbindet.

6. Mitnahmevorrichtung nach Anspruch 5, **dadurch gekennzeichnet, daß** eine erste Stange (42, 44) wenigstens einen Abschnitt hat, der als Zahnrad (48) ausgebildet ist, und eine zweite Stange (38, 40) vorgesehen ist, die als Zahnstange ausgebildet ist.

7. Rollosystem für ein Fahrzeugdach, mit einem ersten Rollo (10), einem zweiten Rollo (12) und einer Mitnahmevorrichtung (14) nach einem der vorhergehenden Ansprüche, wobei die Mitnahmevorrichtung (14) die Rollos (10, 12) so aneinander koppeln kann, daß bei einem Verschieben des ersten Rollos (10) das zweite Rollo (12) mitgenommen wird.

8. Rollosystem nach Anspruch 7, **dadurch gekennzeichnet, daß** das erste Rollo (10) die Mitnahmevorrichtung (14) aufweist, wobei das erste Rollo (10) das in Fahrtrichtung F gesehen vordere Rollo (10) ist.

9. Rollosystem nach Anspruch 7 oder 8, **dadurch gekennzeichnet, daß** die Mitnahmevorrichtung (14) des ersten Rollos (10) an einem Spriegel (18) des zweiten Rollos (12) angreift.

10. Rollosystem nach einem der Ansprüche 7 bis 9, **dadurch gekennzeichnet, daß** eine Koppelstange (50) vorgesehen ist, die an dem zweiten Rollo (12) angebracht ist, wobei das Rastelement (24) an der Koppelstange (50) angreifen kann.

## Geänderte Patentansprüche

### Geänderte Patentansprüche gemäss Regel 86(2) EPÜ.

**1.** Mitnahmevorrichtung für ein Rollo, die zwei Rollos (10, 12) so aneinander koppeln kann, daß bei einem Verschieben eines ersten Rollos (10) ein zweites Rollo (12) mitgenommen wird, und die die beiden Rollos (10, 12) voneinander entkoppeln kann,
**dadurch gekennzeichnet, daß**
ein Rastelement (24) und ein Griff (28) vorgesehen sind, wobei das Rastelement (24) mit dem Griff (28) verbunden ist und so von dem Griff (28) betätigbar ist, daß das Rastelement (24) eine Stellung einnimmt, in der es am zweiten Rollo (12) angreift bzw. in der es nicht am zweiten Rollo (12) angreift.
